(19) Europäisches Patentamt
European Patent Office
Office européen des brevets

(11) EP 1 749 769 B1

(12) **EUROPÄISCHE PATENTSCHRIFT**

(45) Veröffentlichungstag und Bekanntmachung des Hinweises auf die Patenterteilung:
**28.10.2009 Patentblatt 2009/44**

(51) Int Cl.:
***B65G 65/44*** *(2006.01)*  ***G01F 11/40*** *(2006.01)*

(21) Anmeldenummer: **05016665.1**

(22) Anmeldetag: **01.08.2005**

(54) **Pulverdosieranlage**

Powder dosing device

Dispositif de dosage de poudre

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**07.02.2007 Patentblatt 2007/06**

(73) Patentinhaber: **Kindler, Wolfgang**
**72202 Nagold (DE)**

(72) Erfinder: **Kindler, Wolfgang**
**72202 Nagold (DE)**

(74) Vertreter: **Klocke, Peter**
**ABACUS Patentanwälte,**
**Klocke Späth Barth,**
**Kappelstrasse 8**
**72160 Horb (DE)**

(56) Entgegenhaltungen:
**DE-A1- 19 818 542    GB-A- 793 373**
**GB-A- 1 539 923    US-A- 3 934 762**

**Beschreibung**

Die vorliegende Erfindung betrifft eine Pulverdosieranlage für schwer fließende, kohäsive und adhäsive Pulver mit einem Aufgabetrichter mit einer Auslauföffnung, einer Dosiereinrichtung mit einem Austragsraum, in dem die Auslauföffnung des Aufgabetrichters mündet und der einen schrägen Austragsboden und eine seitliche Austragöffnung aufweist, und einer Sendeeinrichtung im Anschluss an die Dosiereinrichtung zur Förderung.

Derartige Pulverdosieranlagen sind bekannt und werden für die verschiedensten Arten von Pulver eingesetzt. Je nach Art des Pulvers und der Dosieraufgabe befindet sich die Auslauföffnung des Aufgabetrichters über der Austragöffnung der Dosiereinrichtung oder entsprechend versetzt dazu.

In der DE 100 54 084 A1 ist eine Austragvorrichtung mit einem schrägen Austragsboden und einer seitlichen Austragöffnung beschrieben, wobei der Austragsboden als Vibrationsboden ausgebildet ist. Diese Austrageinrichtung ist für schwer fließende und kohäsive bzw. adhäsive Pulver grundsätzlich geeignet.

Als Sendeeinrichtung kommen für die diskontinuierliche Förderung beispielsweise ein Sendebehälter für die pneumatische Förderung von pülverförmigem Gut wie er aus der DE 103 34 458 A1 bekannt ist. Dieser weist eine Einfüllöffnung für das Gut, eine seitliche Austragöffnung und eine der Austragöffnung diametral gegenüber angeordnete Einblasöffnung für die Druckluft sowie ein Aufnahmegehäuse und ein seitlich am Boden des. Aufnahmegehäuses angeformte, zur Austragöffnung spitz zulaufendes, das Volumen des Aufnahmegehäuses in diesem Bereich vergrößerndes Austraggehäuse in Form eines Austragstutzens auf.

Eine weitere Gruppe von Sendeeinrichtungen für die kontinuierliche Förderung bilden die bekannten Zellenradschleusen, wobei insbesondere bei den schwer fließenden und kohäsiven bzw. adhäsiven Pulver die Dichtigkeit des Zellenrades gewährleistet sein muss. Aus der DE 693 24 505 T2 ist eine abgedichtete Zellenradschleuse für Schüttgut beschrieben, bei der die Trennwände zwischen den Zellen in Längsrichtung verschiebbare Klingen aufweisen, um damit die einzelnen Zellen gegenüber der Umfangsgehäusewand abzudichten. Eine derartige Einrichtung ist jedoch aufwändig und für die im vorliegenden Anwendungsfall zu fördernden Pulver nicht geeignet.

Aus der GB 793 373 B ist eine Pulverdosieranlage für pulverförmiges und granuliertes Material bekannt, bei der über einen Aufgabetrichter das Material in einen Kasten mit schrägem Boden fällt, wovon es über eine seitliche Auslauföffnung zu einem Förderband gelangt. Der Kasten weist einen schrägen Boden auf, an dem eine Einrichtung für einen Vibrationsförderer angeordnet ist, und die den starren Boden in Schwingungen versetzt, so dass das Material nicht liegen bleibt. Der Transport am Ende erfolgt über Förderbänder.

Gerade für die Pulverdosierung von schwer fließenden, kohäsiven oder adhäsiven Pulvern, wie beispielsweise Eisenoxid, entstehen in der Praxis immer wieder Probleme mit der genauen Dosierung des Pulvers einerseits und mit der Neigung dieses Pulvers zu Anbakkungen, Verklumpungen allein durch den Transport innerhalb einer derartigen Anlage und schlechter Rieselfähigkeit. Die Kombination der bestehenden und bekannten Einrichtungen für den Austrag eines derartigen Materials allein führt nicht ohne weiteres zu einer störungsfreien Dosierung des Materials, sowohl bei kleineren Mengen von 0,5 - 50 kg pro Charge als auch beim kontinuierlichen Fördern.

Der vorliegenden Erfindung liegt daher die Aufgabe zu Grunde, eine Pulverdosieranlage vorzuschlagen, die einen dosierten Austrag von schwer handhabbaren pulverförmigen Materialien wie beispielsweise Eisenoxid mit einer Abschaltungenauigkeit von 50 - 100 g störungsfrei ohne Verstopfungen sowohl für kleinere Dosiermengen bis maximal 50 kg pro Charge als auch für den kontinuierlichen Betrieb ermöglicht.

Diese Aufgabe wird erfindungsgemäß durch eine Pulverdosieranlage mit den Merkmalen des Hauptanspruchs gelöst. Weitere vorteilhafte Ausgestaltungen sind den Unteransprüchen zu entnehmen.

Bei der erfindungsgemäß ausgestalteten Pulverdosieranlage ist der Austragboden der Austrageinrichtung als Vibrationsboden ausgebildet und der Austragraum erstreckt sich seitlich über das Ende des Vibrationsbodens und weist eine nach unten gerichtete Austragöffnung in die Sendeeinrichtung auf. Die Auslauföffnung des Aufgabetrichters und die Austragöffnung der Austrageinrichtung sind zueinander um eine Strecke b nicht überdeckend versetzt, wobei zwischen dem Ende des Vibrationsbodens und der Austragöffnung eine schräge, glatte Bodenfläche als Totzone a angeordnet ist.

Diese Ausgestaltung der Pulverdosieranlage mit der Anordnung der Austrageinrichtung an dem Aufgabetrichter und der daran anschließenden Sendeeinrichtung mit dem Übergang von dem Vibrationsboden auf die schräge, glatte Bodenfläche bis zu der Austragöffnung erlaubt die gewünschte Dosierung mit möglichst geringem Nachlauf dieser schwer fließenden, kohäsiven und adhäsiven Pulver. Dabei ist es wichtig, dass nach dem Vibrationsboden eine Totzone entsteht, in der sich das Pulver bis zu einem gewissen Grad stauen kann, da ohne diese Totzone mit direktem Anschluss der Austragöffnung an das Ende des Vibrationsbodens das Pulver in bestimmten Betriebszuständen unkontrolliert in die Austragöffnung gelangt.

Zweckmäßigerweise weist die Totzone eine der Neigung des Vibrationsbodens entsprechende Neigung auf, so dass diese Totzone eine Verlängerung des Vibrationsbodens hinsichtlich der Neigung darstellt.

Der Vibrationsboden der Austrageinrichtung kann vorteilhafterweise die Auslauföffnung des Aufgabetrichters seitlich überragen, um das pulverförmige Material sicher aus dem Bereich unterhalb der Auslauföffnung des Aufgabetrichters heraus zu führen. Bereits dieser Bereich ist sensibel hinsichtlich möglicher Verstopfungen durch das schwierig zu dosierende und zu fördernde Pulver.

Die Länge der Totzone a ergibt sich dann zweckmäßigerweise aus

$$a = \frac{b\sqrt{h^2 + b^2}\cos\alpha}{b + \sqrt{h^2 + b^2}\sin\alpha * \sin\beta} - c \text{ , wobei } \beta \text{ der}$$

Neigungswinkel des Vibrationsbodens und c die Strecke ist, die der Vibrationsboden seitlich über den Rand der Auslauföffnung des Aufgabetrichters hinaus ragt.

Wie bereits erwähnt, darf die Totzone nicht zu kurz sein, um eine sichere Förderung zu gewährleisten. Zum anderen ist jedoch auch für die Befestigung des Vibrationsbodens eine gewisse Totzone notwendig. Wird die Totzone für das Pulver zu lang gewählt, so baut sich auf der Totzone eine Wand auf, die ab einer gewissen Höhe von dem durch den Vibrationsboden in der Austrageinrichtung heran geführten Pulver nicht mehr überwunden werden kann.

Des Weiteren hat sich gezeigt, dass der natürliche Böschungswinkel des zu verwendenden Pulvers zu beachten ist, den das Pulver bei Aufschüttung von sich aus einnimmt. Vorteilhafterweise ist daher der Winkel α zwischen der Totzone a und der Verbindungslinie zwischen den einander zugewandten und um die Strecke b in horizontaler und eine Höhe h in vertikaler Richtung versetzten Rändern der Auslauföffnung und der Austragöffnung entsprechend dem natürlichen Böschungswinkel des verwendeten Pulvers.

Gemäß einer bevorzugten Ausführungsform weist der Austragraum einen eckigen, vorzugsweise rechteckigen Querschnitt auf und die Austragöffnung ist rund (einschließlich oval) ausgebildet. Dies bewirkt beidseitig der Austragöffnung einen Keil mit einem dem natürlichen Böschungswinkel entsprechenden Anstieg, der optimal das Nachlaufen des Pulvers verhindert und zu einer erhöhten Dosiergenauigkeit führt.

Für den diskontinuierlichen Betrieb ist die Sendeeinrichtung als Sendebehälter ausgebildet, der zur Austragöffnung hin ein spitz zulaufendes, das Volumen des Aufnahmegehäuses in diesem Bereich vergrößerndes Austraggehäuse in Form eines Austragstutzens aufweist. Durch die besondere Ausgestaltung des Sendebehälters wird das Volumen in der Spitze langsam verringert, so dass keine zusätzliche Kraft auf das darunter befindliche Material wirkt. Damit wird ein Verbacken des darunter befindlichen Materials verhindert und mit dem Einblasen der Luft aus der Spitze pulverförmig heraustransportiert. Eine derartige Pulverdosieranlage erlaubt somit gerade die störungsfreie Dosierung und den Austrag von kleinen Mengen dieses schwer fließenden, adhäsiven pulverförmigen Materials. Gemäß einer weiteren vorteilhaften Ausgestaltung weist der Sendebehälter einen Fluidboden auf, welcher auch in diesem Bereich das Anhaften des pulverförmigen Materials verhindert.

Bei dem Sendebehälter ist in einer besonders zweckmäßigen Ausgestaltung die maximale Höhe des Austragstutzens im Verhältnis zur Länge des Austragstutzens nicht größer als 2,5, da oberhalb dieser Grenze sich der Raum zusetzt und nur am Boden ein Kanal bestehen bleibt.

Für die kontinuierliche Förderung ist die Sendeeinrichtung als Zellenradschleuse mit einem Gehäuse, in dem sich ein auf einer Antriebswelle angeordnetes Zellenrad befindet und das oberhalb des Zellenrades eine Einlauföffnung und unterhalb der Antriebswelle eine Austragöffnung und eine diametral gegenüber angeordneten Einblasöffnung für Druckluft aufweist, ausgebildet. Die Antriebswelle ist mit radialem Druck beaufschlagbar gelagert, so dass die Zellen gegen den der Einlauföffnung gegenüber angeordneten Boden drücken. Damit wird eine Abdichtung am Umfang erreicht, die beim pneumatischen Fördern das Pulver nicht in die Umgebung gelangen lässt. Zusätzlich ist eine in axialer Richtung bewegliche und mit Druck beaufschlagbare seitliche Gehäusewand zum Andrücken der Gehäusewand an die Stirnseiten der Wände der Zellen vorgesehen, um auch diesen bereich sicher und gleichzeitig einfach und kostengünstig abzudichten. Der Druck auf die Antriebswelle und auf die Seitenwand kann pneumatisch oder mittels Federn aufgebracht werden. Die Innseite der seitlichen und umfänglichen Gehäusewände (25, 26) weisen dazu noch eine elastische Schicht als Beschichtung oder Verschleißteil, beispielsweise aus Polyoxymethylen (POM) oder Polyvinylchlorid (PVC), auf.

Gemäß einer weiteren Ausbildung sind die die Zellen bildenden Blätter des Zellenrades schräg zur Zellenradachse, vorzugsweise um einen Winkel von 5° bis 15°, angeordnet. Damit wird vermieden, dass an der umfänglichen Gehäusewand, insbesondere am Boden, Beschädigungen in Form von Rattermarken entstehen.

Nachfolgend wird die Erfindung anhand von Ausführungsbeispielen in Verbindung mit den begleitenden Zeichnungen näher erläutert. Es stellen dar:

Figur 1     eine Schnittdarstellung durch eine Pulverdosiereinrichtung mit einem Sendebehälter als Sendeeinrichtung;

Figur 2     eine vergrößerte Darstellung des Bereiches zwischen der Auslauföffnung des Aufgabetrichters und der Austragöffnung der Austrageinrichtung; und

Figur 3     eine Seitenansicht auf eine Zellenradschleuse mit fehlender Seitenwand;

Figur 4     eine Schnittdarstellung des Gehäuses der Zellenradschleuse mit vollständigem Zellenrad; und

Figur 5     die Anordnung eines Blattes des Zellenrades in Bezug auf die Achse des Zellenrades.

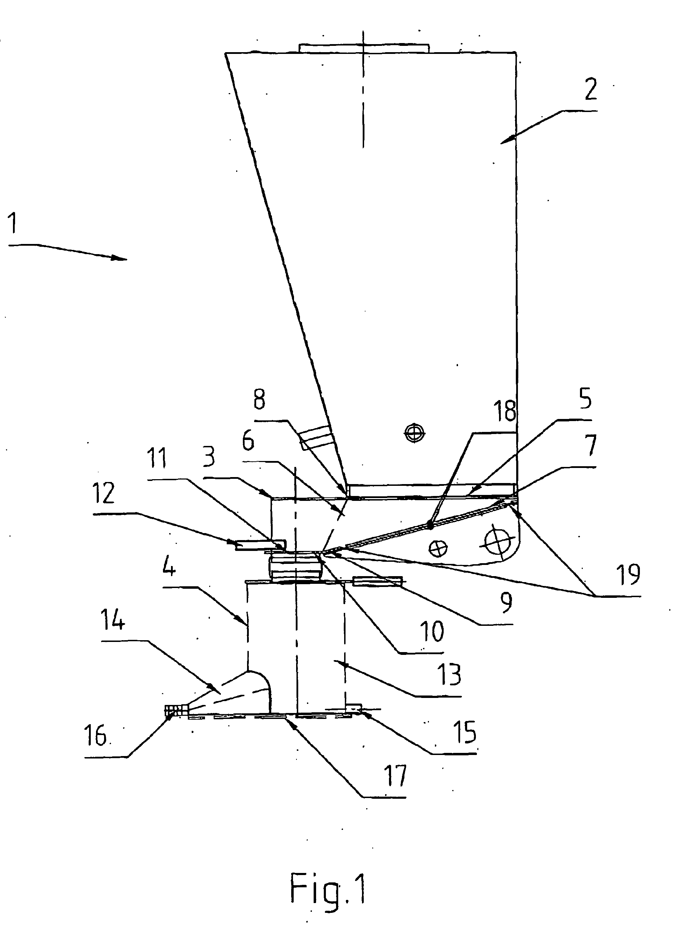

Figur 1 zeigt die Pulverdvsieranlage 1 mit dem Aufgabetrichter 2, der darunter angeordneten Austrageinrichtung 3 und dem darunter befindlichen, an eine nicht dargestellte Druckluftversorgung einerseits und an ein Weitertransportsystem andererseits anschließbaren Sendebehälter 4.

Der Aufgabetrichter 2 kann einen runden oder eckigen Querschnitt mit einer entsprechenden, am unteren Ende angeordneten Auslauföffnung 5, die in den Austragraum 6 der Austrageinrichtung 3 mündet, aufweisen. Die Schrägen des Aufgabetrichters sowie die Wandungen sind in der dem Fachmann geläufiger Art und Weise so ausgebildet, dass auch hier das schwer fließende, adhäsive Pulver nicht hängen bleiben kann. Zusätzlich kann eine Druckentlastung über eine Rüttelplatte oder Fluidgewebeplatte erfolgen.

In der Austragrichtung 3 wird der Boden des Austragraumes 6 durch einen Vibrationsboden 7 gebildet, der über dem Fachmann geläufige Antriebsmittel, beispielsweise pneumatisch oder über Exzenter elektromotorisch, in Vibrationen versetzt wird, um das Pulver bei Bedarf aus dem Aufgabetrichter 2 auszutragen. Dabei ist wichtig, dass der Austrag in der gewünschten Menge erfolgt und nicht durch das anhaftende Pulver behindert wird oder nachläuft. Der Vibrationsboden 7 ist schräg angeordnet und überragt in seitlicher Richtung den Rand 8 der Auslauföffnung 5 um ein gewisses Maß c. In Verlängerung des Vibrationsbodens 7 befindet sich mit gleicher Neigung eine Totzone 9, die mit dem Rand 10 der Austragöffnung 11 des seitlich über das Ende des Vibrationsbodens 7 verlängerten Austragraumes 6 abschließt. Der Querschnitt des Austragraumes 6 ist eckig und der Austragöffnung 11 rund, wodurch sich an den Außenwänden des Austragraumes 11 jeweils ein Materialkeil bildet, der zur Stabilisierung des natürlichen Böschungswinkels beiträgt. Dies reduziert die Nachlaufmenge. Oberhalb der Austragöffnung 11 befindet sich noch aus Sicherheitsgründen ein Sperrschieber 12, mit dem zusätzlich ein möglicher Nachlauf des Pulvers in das Aufnahmegehäuse 13 des darunter befindlichen Sendebehälters 4 verhindert wird. Im allgemeinen wird der Nachlauf durch die anderen konstruktiven Maßnahmen bereits verhindert.

Der Sendebehälter 4 weist ein Aufnahmegehäuse 13 mit im wesentlichen rundem Querschnitt auf, das am unteren Ende ein spitz zulaufendes, das Volumen des Aufnahmegehäuses 13 in diesem Bereich vergrößernden Austragstutzen 14 aufweist. Der Anschlussstutzen 15 dient der Einbringung der Förderluft und der Austrag erfolgt über die Spitze 16. Der Boden 17 des Aufnahmegehäuses 13 ist als Fluidboden ausgebildet, um auch in diesem Bereich das schwer fließende, adhäsive pulverförmige Material fließfähig zu halten.

Durch diese grundsätzliche Ausgestaltung der Pulverdosieranlage ist es möglich, kleinere Chargen bis 50 kg zuverlässig mit diesem Material zu dosieren. Dabei ist für die Länge der Totzone 9 in der Austrageinrichtung 3 die Beziehung zu dem natürlichen Böschungswinkel des verwendeten pulverförmigen Materials sowie der Versatz der Ränder 8 und 10 als auch der Höhe des Austragraumes 6 in diesem Bereich (m.a.W. die Entfernung der Ränder 8 und 10 voneinander) zu berücksichtigen.

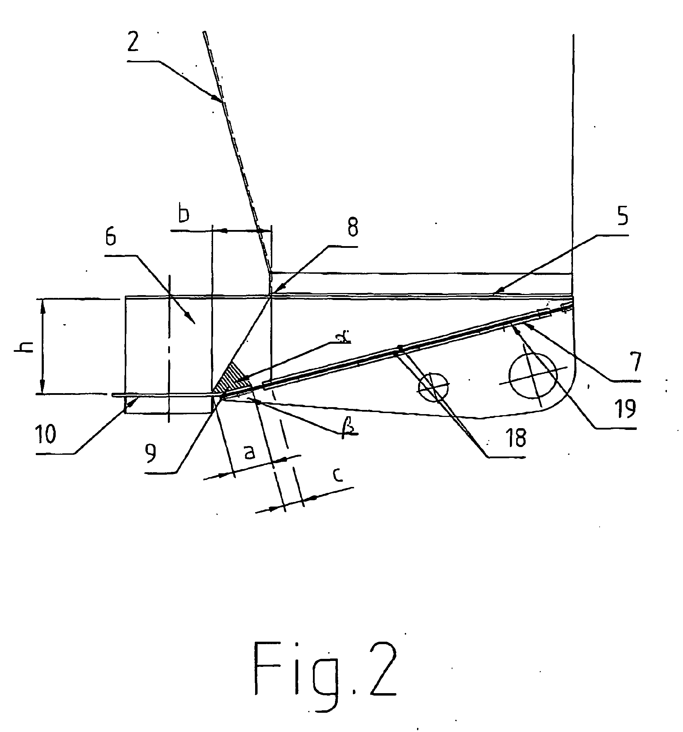

Figur 2 zeigt in vergrößerter Darstellung die einzelnen relevanten Größen, die bei der Bestimmung der Totzone zu berücksichtigen sind. Der Vibrationsboden 7 ist zusammen mit der Totzone 9 gegenüber der Horizontalen um den Winkel $\beta$ geneigt und endet am Rand 10 der Austragöffnung 11. Die Höhe h gibt den Abstand von dem Rand 10 zu der Verlängerung der Unterkante der Auslauföffnung 5 an und kann auch gleichzeitig die Höhe des Austragraumes 6 sein. Mit b ist der Versatz des Randes 10 der Austragöffnung 11 von dem Rand 8 der Auslauföffnung 5 bezeichnet. Der Vibrationsboden 7 besteht aus einem umlaufenden Klemmrahmen mit dazwischen angeordnetem Gummiboden 19, der mit zwei Druckplatten 18 stabilisiert ist. In dem Ausführungsbeispiel überragt der Vibrationsboden 7 den Rand 8 um die Strecke c. Die gestrichelt dargestellte Verbindungslinie zwischen den Rändern 10 und 8 schließt mit der Totzone 9, deren Länge mit a bezeichnet ist, einen Winkel $\alpha$ ein. Es wurde festgestellt, dass dieser Winkel $\alpha$ im Wesentlichen dem natürlichen Böschungswinkel des zu bearbeitenden pulverförmigen Materials entsprechen muss, um eine optimale Dosierung zu erreichen. Gleichzeitig darf die Länge a der Totzone 9, die dem Klemmrahmen entspricht, nicht zu groß, aber auch nicht zu klein sein, um einen störungsfreien Ablauf zu gewährleisten. Auf Grund der geometrischen Anordnung kann die Länge der Totzone a aus

$$a = \frac{b\sqrt{h^2 + b^2}\cos\alpha}{b + \sqrt{h^2 + b^2}\sin\alpha * \sin\beta} - c,$$

ermittelt werden.

Obige Formel berücksichtigt auch den Fall, dass die Strecke c = 0 ist oder der Winkel $\beta$ = 0 ist. Dabei ist grundsätzlich der Winkel $\alpha$ und auch die Entfernung zwischen den Rändern 10 der Austragöffnung 11 und dem Rand 8 der Auslauföffnung 5, der durch die Größen h und b definiert wird, vorgegeben.

In einem Ausführungsbeispiel für Eisenoxid mit einer Körnung von 0,06 - 1,0 $\mu$m mit 3% Feuchte ergibt sich ein Böschungswinkel $\alpha$ = 54°. Die Neigung $\beta$ beträgt 15°, so dass sich bei den gewählten Abmessungen bei dem Ausführungsbeispiel mit b = 60 mm, h = 175 mm, c = 40 mm eine Totzone 9 mit ca. a = 26 mm ergibt.

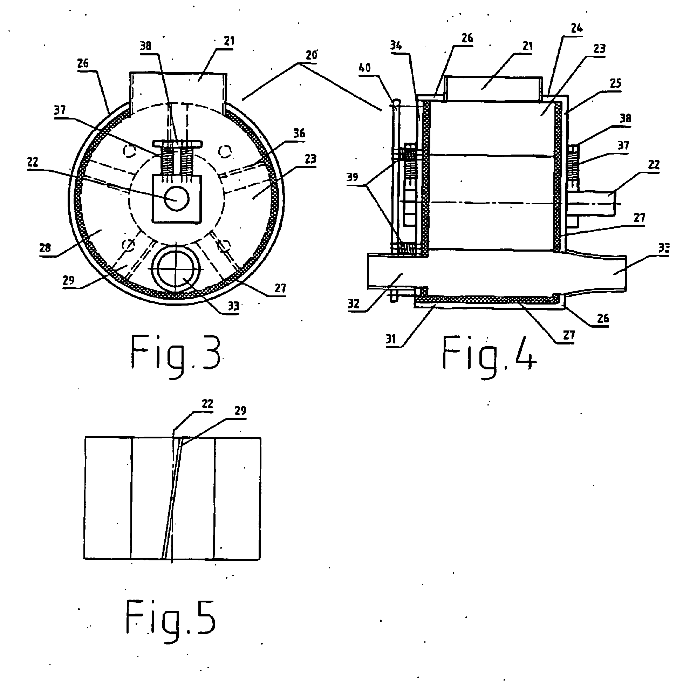

Die Figuren 3 und 4 zeigen eine Zellenradschleuse 20, die an Stelle des Sendebehälters 4 in Figur 1 an die Austragöffnung 11 der Austrageinrichtung 3 angeordnet werden kann, um im kontinuierlichen Betrieb den einwandfreien Transport des Pulvers zu ermöglichen. Diese Zellenradschleuse 20, weist besondere Merkmale auf, die sie zum Einsatz bei schwer fließenden, adhäsiven und kohäsiven Pulver auch in Verbindung mit anderen Austrageinrichtungen befähigen. Die Zellenradschleuse 20 weist ein Gehäuse 24 mit einer Einlauföffnung 21, Seitenwänden 25, einer Umfangswand 26 und im unteren Bereich eine Einblasöffnung 32 und gegenüber angeordneten Austragöffnung 33 an einem Anschlussstutzen auf. Sowohl die Seitenwände 25, 34 als auch die Umfangswand 26 mit dem als Boden 31 bezeichneten Bereich weisen auf der Innenseite ein Verschleißteil 27 aus POM oder PVC auf. Das Zellenrad 23 mit den durch die Blätter 29 getrennten Zellen 28 ist auf einer Antriebswelle 22 angeordnet, die am Gehäuse 24 beidseitig über Druckfedern 37 und Druckplatte 38 in radialer Richtung zum Boden 31 gelagert sind. Über die Blätter 29 erfolgt damit die Abdichtung in dem Bereich, in dem das gefördert werden muss. Die Blätter 29 sind, wie in Figur 5 gezeigt, gegenüber der Achse des Zellenrades 23 um einen Winkel von ungefähr 5° bis 15° schräg gestellt, wodurch die Standzeit des Verschleißteils 27 verlängert wird. Eine Seitenwand 34 ist als Druckwand ausgebildet, die in Richtung der Achse der Antriebswelle 22 aufgrund des über weitere Druckfedern 39, die sich an einer seitlichen Druckplatte 40 abstützen, verschiebbar ist. Damit werden die Zellen 28 an den Stirnseiten 36 der Blätter 27 durch die Seiten wände 25, 34 sicher abgedichtet.

Für die Innenauskleidung der einzelnen Teile der Pulverdosieranlage werden, soweit erforderlich, in bekannter Weise antihaftende Werkstoffe eingesetzt.

**Patentansprüche**

1. Pulverdosieranlage für schwer fließende, kohäsive und adhäsive Pulver mit einem Aufgabetrichter (2) mit einer Auslauföffnung (5),
   einer Austrageinrichtung (3) mit einem Austragraum (6), in den die Auslauföffnung (5) des Aufgabetrichters (2) mündet und der einen schrägen Austragboden und eine Austragöffnung (11) aufweist,
   einer Sendeeinrichtung (4, 20) im Anschluss an die Austrageinrichtung (3) zur pneumatischen Förderung mit einem Aufnahmegehäuse (13), wobei der Austragboden der Austrageinrichtung (3) als Vibrationsboden (7) ausgebildet ist und der Austragraum (6) sich seitlich über das Ende des Vibrationsbodens (7) erstreckt und eine nach unten gerichtete Austragöffnung (11) in die Sendeeinrichtung (4, 20) aufweist,
   die Auslauföffnung (5) des Aufgabetrichters (2) und die Austragöffnung (11) der Austrageinrichtung (3) zueinander um eine Strecke (b) nicht überdeckend versetzt sind, **dadurch gekennzeichnet, dass** zwischen dem Ende des Vibrationsbodens (7) und der Austragöffnung (11) eine schräge, glatte Bodenfläche als nicht vibrierende Totzone (9) angeordnet ist und das Aufnahmegehäuse der Sendeeinrichtung (4, 20) zur pneumatischen Förderung mit einer seitlichen Austragöffnung (16, 32) und einer diametral gegenüber angeordneten Einblasöffnung (15, 33) für Druckluft eingerichtet ist.

2. Pulverdosieranlage nach Anspruch 1, **dadurch gekennzeichnet, dass** der Austragraum (6) einen eckigen, vorzugsweise rechteckigen Querschnitt aufweist und die Austragöffnung (11) rund ausgebildet ist

3. Pulverdosieranlage nach Anspruch 1 oder 2, **dadurch gekennzeichnet, dass** die Totzone (9) eine der Neigung des Vibrationsbodens (7) entsprechende Neigung aufweist und vorzugsweise der Vibrationsboden (7) der Austrageinrichtung (3) die Auslauföffnung (5) des Aufgabetrichters (2) seitlich überragt.

4. Pulverdosieranlage nach einem der vorangegangenen Ansprüche, **dadurch gekennzeichnet, dass** der Winkel α zwischen der Totzone (9) und der Verbindungslinie zwischen den einander zugewandten und um die Strecke b in horizontaler und eine Höhe h in vertikaler Richtung versetzten Rändern (8, 10) der Auslauföffnung (5) und der Austragöffnung (11) dem natürliche Böschungswinkel des verwendeten Pulvers entspricht

5. Pulverdosieranlage nach Anspruch 4, **dadurch gekennzeichnet, dass** die Länge a der Totzone sich aus

$$a = \frac{b\sqrt{h^2 + b^2}\cos\alpha}{b + \sqrt{h^2 + b^2}\sin\alpha * \sin\beta} - c$$

ergibt, wobei β der Neigungswinkel des Vibrationsbodens (7) und c die Strecke ist, die der Vibrationsboden (7) seitlich über den Rand (8) der Auslauföffnung (5) des Aufgabetrichters (2) hinaus ragt.

6. Pulverdosieranlage nach einem der vorangegangenen Ansprüche, **dadurch gekennzeichnet, dass** die Sendeinrichtung (4) als Sendebehälter ausgebildet ist, der zur Austragöffnung (16) hin ein spitz zulaufendes, das Volumen des Aufnahmegehäuses (13) in diesem Bereich vergrößernder Austragstutzen (14) aufweist, wobei vorzugsweise die maximale Höhe des Austragstutzens (14) im Verhältnis zur Länge des Austragstutzens nicht größer als 2,5 ist.

7. Pulverdosieranlage nach Anspruch 6, **dadurch gekennzeichnet, dass** der Sendebehälter (4) einen Fluidboden (17) aufweist.

**8.** Pulverdosieranlage nach einem der vorangegangenen Ansprüche, **dadurch gekennzeichnet, dass** die Sendeeinrichtung (20) als Zellenradschleuse mit einem Gehäuse (24) in dem sich ein auf einer Antriebswelle (22) angeordnetes Zellenrad (23) mit die Zellen (28) bildenden Blättern (29) befindet und das oberhalb des Zellenrades (23) eine Einlauföffnung (21) und unterhalb der Antriebswelle (22) eine Austragöffnung (33) und eine diametral gegenüber angeordneten Einblasöffnung (32) für Druckluft aufweist, wobei die Zellenradschleuse (20) eine mit radialem Druck beaufschlagbare gelagerte Antriebswelle (22) aufweist, so dass die Zellen (28) gegen den der Einlauföffnung (21) gegenüber angeordneten Boden (31) drücken, eine in axialer Richtung bewegliche und mit Druck beaufschlagbare seitliche Gehäusewand (34) zum Andrücken der Gehäusewand (34) an die Stirnseiten (36) der Blätter (29) der Zellen (28), und die Innseite der seitlichen und umfänglichen Gehäusewände (25, 26, 34) eine elastische Schicht (27) aufweist.

**9.** Pulverdosieranlage nach Anspruch 8, **dadurch gekennzeichnet, dass** die die Zellen (28) bildenden Blätter (29) des Zellenrades (23) schräg zur Zellenradachse (22), vorzugsweise um einen Winkel von 5° bis 15°, angeordnet sind.

**Claims**

**1.** A powder dosing system for not easily flowing cohesive and adhesive powders with a feed hopper (2) with a discharge opening (5),
a discharge device (3) with a discharge chamber (6) into which the discharge opening (5) of the feed hopper (2) opens and which has a sloping discharge floor as well as a discharge opening (11),
a conveying device (4, 20) for pneumatic conveying downstream from the discharge device (3), with a receptacle housing (13), where
the discharge floor of the discharge device (3) is designed as a vibrating floor (7), and the discharge chamber (6) extends laterally beyond the end of the vibrating floor (7), having a discharge opening (11) pointing downward into the conveying device (4, 20), and where
the outlet opening (5) of the feed hopper (2) and the discharge opening (11) of the discharge device (3) are staggered relative to each other, without overlapping, by a distance 'b',
**characterized by** that between the end of the vibrating floor (7) and the discharge opening (11) a sloping and smooth floor surface serving as a non-vibrating dead zone (9) is located and the receptacle housing of the conveying device (4, 20), for pneumatic conveying, is provided with a lateral discharge opening (16, 32) and an inlet port (15, 33) for compressed air located diametrically opposite the discharge opening.

**2.** Powder dosing system according to Claim 1, **characterized by** that the discharge chamber (6) has a preferably rectangular cross-section and that the discharge opening (11) is round.

**3.** Powder dosing system according to Claim 1 or 2, **characterized by** that the angle of inclination of the dead zone (9) corresponds to that of the vibrating floor (7), and that the vibrating floor (7) of the discharge device (3) preferably extends laterally beyond the discharge opening (5) of the feed hopper (2).

**4.** Powder dosing system according to one of the preceding Claims, **characterized by** that the angle $\alpha$ between the dead zone (9) and the connecting line between the edges (8, 10) of the outlet opening (5) and the discharge opening (11) that face each other and are staggered horizontally by the distance 'b' and vertically by the height 'h' corresponds to the specific angle of repose of the powder in question.

**5.** Powder dosing system according to Claim 4, **characterized by** that the length of the dead zone is based on

$$a = \frac{b\sqrt{h^2 + b^2}\cos\alpha}{b + \sqrt{h^2 + b^2}\sin\alpha * \sin\beta} - c \,,$$

where $\beta$ is the angle of inclination of the vibrating floor (7) and c is the distance by which the vibrating floor (7) extends laterally beyond the edge (8) of the discharge opening (5) of the feed hopper (2).

**6.** Powder dosing system according to one of the preceding Claims, **characterized by** that the conveying device (4) is designed as a conveying container that has a discharge nozzle (14) that enlarges the volume of the receptacle housing (13) in that area and tapers towards the discharge opening (16), where the ratio of the maximum height of the discharge nozzle (14) and the length of the discharge nozzle preferably does not exceed 2.5.

**7.** Powder dosing system according to Claim 6, **characterized by** that the conveying container (4) has a fluid floor (17).

**8.** Powder dosing system according to one of the preceding Claims, **characterized by** that the conveying device (20) is designed as a bucket wheel lock with a housing (24) that contains a bucket wheel (23) that is installed on a drive shaft (22) and has blades (29) forming the buckets (28), and that has an inlet opening (21) above the bucket wheel (23) and a discharge opening (33) below the drive shaft, with an inlet port (32) for compressed air located diametrically across from the discharge opening (33), where the bucket wheel lock (20) has a drive shaft (22) that is supported in such fashion that radial pressure can be applied to it so that the buckets (28) press against the floor (31) located opposite the inlet opening (21), and also a lateral housing wall (34) that moves in axial direction and to which pressure can be applied so that the housing wall (34) can be pressed against the front sides (36) of the blades (29) of the buckets (28), and where the inside of the lateral and circumferential housing walls (25, 26, 34) has an elastic lining (27).

9. Powder dosing system according to Claim 8, **characterized by** that the blades (29) of the bucket wheel (23) that form the buckets (28) are arranged at an angle to the bucket wheel axis (22), preferably at an angle of 5° to 15°.

## Revendications

1. Dispositif de dosage de poudre pour des poudres s'écoulant difficilement, cohésives et adhésives, avec
une trémie d'alimentation (2) avec une ouverture de sortie ou d'écoulement (5),
un équipement d'évacuation (3) avec une chambre d'évacuation (6), dans laquelle débouche l'ouverture de sortie (5) de la trémie d'alimentation (2) et qui présente un fond d'évacuation oblique ainsi qu'une ouverture d'évacuation (11),
un équipement d'envoi (4, 20) en raccordement à l'équipement d'évacuation (3), destiné au transport pneumatique et pourvu d'un carter récepteur (13),
sachant que le fond d'évacuation de l'équipement d'évacuation (3) est réalisé sous forme de fond vibrant (7) et que la chambre d'évacuation (6) s'étend latéralement au-dessus de l'extrémité du fond vibrant (7) et présente une ouverture (11) d'évacuation dans l'équipement d'envoi (4, 20) qui est dirigée vers le bas,
et que l'ouverture de sortie (5) de la trémie d'alimentation (2) et l'ouverture d'évacuation (11) de l'équipement d'évacuation (3) ne sont pas en recouvrement, étant mutuellement décalées d'une distance (b),
**caractérisé en ce qu'**une surface de fond oblique et lisse est disposée en tant que zone morte non vibrante (9) entre l'extrémité du fond vibrant (7) et l'ouverture d'évacuation (11), et le carter récepteur de l'équipement d'envoi (4, 20) est équipé ou configuré pour le transport pneumatique avec une ouverture d'évacuation latérale (16, 32) et une ouverture (15, 33) diamétralement opposée d'insufflation d'air comprimé.

2. Dispositif de dosage de poudre selon la revendication 1, **caractérisé en ce que** la chambre d'évacuation (6) présente une section polygonale, de préférence rectangulaire, et l'ouverture d'évacuation (11) est réalisée ronde.

3. Dispositif de dosage de poudre selon la revendication 1 ou 2,
**caractérisé en ce que** la zone morte (9) présente une inclinaison correspondant à l'inclinaison du fond vibrant (7) et, de préférence, le fond vibrant (7) de l'équipement de distribution (3) s'étend latéralement au-delà de l'ouverture de sortie (5) de la trémie d'alimentation (2).

4. Dispositif de dosage de poudre selon l'une des revendications précédentes, **caractérisé en ce que** l'angle $\alpha$ entre la zone morte (9) et la ligne de jonction entre l'ouverture d'évacuation (11) et les bords en vis-à-vis (8, 10) de l'ouverture de sortie (5), mutuellement décalés de la distance b en direction horizontale et d'une hauteur h en direction verticale, correspond à l'angle de pente naturel de la poudre utilisée.

5. Dispositif de dosage de poudre selon la revendication 4, **caractérisé en ce que** la longueur a de la zone morte s'obtient par l'équation suivante :

$$a = \frac{b\sqrt{h^2 + b^2}\cos\alpha}{b + \sqrt{h^2 + b^2}\sin\alpha * \sin\beta} - c$$

où $\beta$ est l'angle d'inclinaison du fond vibrant (7), et c la distance de laquelle le fond vibrant (7) s'étend latéralement au-delà du bord (8) de l'ouverture de sortie (5) de la trémie d'alimentation (2).

6. Dispositif de dosage de poudre selon l'une des revendications précédentes, **caractérisé en ce que** l'équipement d'envoi (4) est réalisé sous forme de récipient d'envoi, qui présente une tubulure d'évacuation (14) se terminant en pointe en direction de l'ouverture d'évacuation (16) et augmentant le volume du carter récepteur (13) dans cette région, sachant que, de préférence, le rapport de la hauteur maximale de la tubulure d'évacuation (14) à la longueur de la tubulure d'évacuation n'est pas supérieur à 2,5.

7. Dispositif de dosage de poudre selon la revendication 6, **caractérisé en ce que** le récipient d'envoi (4) présente un fond fluide (17).

8. Dispositif de dosage de poudre selon l'une des revendications précédentes, **caractérisé en ce que** l'équipement d'envoi (20) est réalisé sous forme d'écluse à roue cellulaire avec un carter (24) dans lequel se trouve une roue cellulaire (23) disposée sur un arbre d'entraînement (22) et pourvue de pales (29) formant les cellules (28), carter qui présente au-dessus de la roue cellulaire (23) une ouverture d'admission (21) et en dessous de l'arbre d'entraînement (22) une ouverture d'évacuation (33) et une ouverture (32) diamétralement opposée d'insufflation d'air comprimé, sachant que l'écluse à roue cellulaire (20) présente un arbre d'entraînement (22) monté en pouvant être sollicité par une pression radiale, de sorte que les cellules (28) exercent une pression contre le fond (31) disposé en vis-à-vis de l'ouverture d'admission (21), et présente une paroi de carter latérale (34), mobile en direction axiale et pouvant être sollicitée en pression afin de presser la paroi de carter (34) contre les côtés frontaux (36) des pales (29) des cellules (28), le côté intérieur des parois latérales et circonférentielle (25, 26, 34) du carter présentant une couche élastique (27).

9. Dispositif de dosage de poudre selon la revendication 8, **caractérisé en ce que** les pales (29) de la roue cellulaire (23) qui forment les cellules (28) sont disposées en oblique par rapport à l'axe (22) de la roue cellulaire, de préférence sous un angle de 5° à 15°.

1

2

8

18

5

6

7

11

3

12

9

19

4

10

14

13

16

15

17

Fig.1

Fig.2

Fig.3

Fig.4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10054084 A1
- DE 10334458 A1
- DE 69324505 T2
- GB 793373 B